Europäisches Patentamt

European Patent Office

Office européen des brevets

(19)

(11) Publication number: **0 158 530 B1**

# EUROPEAN PATENT SPECIFICATION

(12)

(45) Date of publication of patent specification: **05.02.92**   (51) Int. Cl.⁵: **G06F  7/52**, G06F  7/49

(21) Application number: **85302455.2**

(22) Date of filing: **04.04.85**

(54) **Nonrestoring divider.**

(30) Priority: **09.04.84 JP 70353/84**
**22.06.84 JP 128610/84**

(43) Date of publication of application:
**16.10.85 Bulletin  85/42**

(45) Publication of the grant of the patent:
**05.02.92 Bulletin  92/06**

(84) Designated Contracting States:
**DE FR GB**

(56) References cited:
**US-A- 3 852 581**

**PATENT ABSTRACTS OF JAPAN, vol. 5, no.
201 (P-94)[873], 19th December 1981; & JP-
A-56 123 038 (FUJITSU K.K.) 26-09-1981**

**PATENT ABSTRACTS OF JAPAN, vol. 7, no.
260 (P-237)[1405], 18th November 1983; & JP-
A-58 142 441 (TOKYO SHIBAURA DENKI K.K.)
24-08-1983**

**IBM TECHNICAL DISCLOSURE BULLETIN, vol.
24, no. 11B, April 1982, pages 5812-5819, New
York, US; K.G. TAN: "Transformed high-radix
division for high performance computers"**

(73) Proprietor: **FUJITSU LIMITED**
**1015, Kamikodanaka Nakahara-ku
Kawasaki-shi Kanagawa 211(JP)**

(72) Inventor: **Ikeda, Masayuki Eshiru Nakahara
404**
**629-12, Shimokodanaka Nakahara-ku
Kawasaki-shi Kanagawa 211(JP)**

(74) Representative: **Skone James, Robert Edmund
et al**
**GILL JENNINGS & EVERY 53-64 Chancery
Lane
London WC2A 1HN(GB)**

EP 0 158 530 B1

## Description

This invention relates to a nonrestoring divider and, more particularly, to a high speed circuit construction by which a circuit for predicting a partial quotient is formed using a smaller amount of hardware.

Conventionally, a nonrestoring divider is used as one element of a divider system. In such a system, sets of quotients used for forming digits of the quotient are controlled in such a manner that where sets of quotients exist which do not include a zero, then each digit of the quotient is selected therefrom.

These particular sets of the quotients having no zero are usually expressed as follows, wherein "r" represents the radix.

$-(r - 1)$, $-(r - 2)$,..., $-1$, $+1$, ..., $r - 2$, $r - 1$

In many calculators, calculation is carried out by using a plurality of bit units rather than just one bit unit and, obviously, a radix larger than 2 is used.

For example, the radix is 4 in a 2 bit unit, and becomes 8 in a 3 bit unit.

Usually, an operation unit of P bits is an m digit figure having r as the radix, and is expressed as;

$$r = 2^{P/m}$$

A characteristic feature of nonrestoring division is the use of a negative number in the digits as a result of the operation by remaining the inversion of negative and the positive of the dividend formed when the digit of the result of the operation is determined, and the dividend or multiple of the dividend is added or subtracted by the sign for the dividend by using the negative number in the result of the operation.

For example, the values multiplying the dividend by k [i.e., the multiple $-(r - 1)$, $-(r - 2)$, ..., $-1$, $+1$, ..., $r - 2$, $r - 1$] are set in the divisor registers, the divisor registers are selected by a predicting signal output from a partial quotient predictor, and the quotient is obtained by repeatedly adding and subtracting the values multiplying the dividend by k.

In such a nonrestoring divider system, when the number of bits "n" used as the operation unit becomes large, the radix is increased, for example to $2^n$, so that the number of operation repetitions can be decreased and high speed operation can be expected. However, the multiplying of the divisor becomes complex, and therefore the predicting logic for the quotient must be precise, which gives rise to the problem that the number of circuits must be considerably increased.

Concerning the logic for predicting the partial quotient, a method has not been developed for forming an effective predicting circuit for the partial quotient.

JP-A-56123038 describes a divider which comprises a first control signal estimating circuit which forms a control signal when there exists no carry operation from a predetermined bit position; a second control signal estimating circuit which forms a control signal when there exists a carry operation from the predetermined bit position; an operation circuit which commences the operation simultaneously with said first and second control signal estimating circuits; and a select circuit which selects either one of said first or second control signal estimating circuit depending upon the presence or absence of the carry of said operation circuit from the predetermined bit position. This is slow in operation.

An object of the present invention is to provide a nonrestoring divider which can decrease the time needed for predicting the partial quotient.

Another object of the present invention is to provide a nonrestoring divider which can decrease the amount of hardware used for the logic needed for predicting the partial quotient.

According to the invention there is provided a non-restoring divider apparatus including a divisor register for storing a divisor; a partial remainder register for storing a dividend or a partial remainder; prediction means for predicting a partial quotient; a multiplier operatively connected to the divisor register, for multiplying the content of the divisor register by a multiplying factor constituted by the partial quotient from the prediction means; a first adder for subtracting the output of the multiplier from the content of the partial remainder register and for calculating a new partial remainder, the prediction means predicting the partial quotient from upper digits of the divisor register and upper digits of the partial remainder; and a quotient correction circuit for determining the true value of the quotient in response to the predicted partial quotients, wherein the prediction means repeats a cycle which sets the output of the adder at the partial remainder register so as to carry out the division; characterised by a second adder, operatively connected to the multiplier and the partial remainder register, for determining the difference between the upper digits of the multiplier and the upper digits of the partial remainder register; carry predicting means operatively connected to the first adder, for determining a carry to be propagated to the second adder from the first adder, the carry being determined from remainder digits of the multiplier and remainder digits of the partial remainder register; a decoder operatively connected to the second adder for decoding the output from the second adder, a modified decoder operatively connected to the second adder for decoding the output of the second adder dependant upon whether the sign bit of the output from the second adder is positive or negative, wherein the modified decoder decodes the signal on the assumption that a carry is provided by the carry predicting means connected to the first adder and the decoder decodes on the assumption that there is no carry; in that the prediction means comprise a first predictor operatively connected to the modified decoder for predicting the partial quotient from a corrected output of the second adder and the upper digits of the divisor register; and a second predictor operatively connected to the decoder for predicting the partial quotient from the output of the second adder and the upper digits of the divisor register; and selector means for selecting either the output of the first predictor or the output of the second predictor dependent upon the output of the carry predicting means thereby making the output of the selecting means correspond to a predicted quotient which constitutes the multiplying factor applied to the multiplier.

Embodiments of the invention will now be described, by way of example, with reference to the accompanying drawings, in which

Figure 1 is a diagram showing the principle of one example of a conventional nonrestoring divider apparatus;

Figure 2 is a diagram showing the principle of one example of a multiplier shown in Figure 1;

Figure 3 is a diagram showing the principle of one example of a circuit for predicting a partial quotient shown in Figure 1;

Figure 4 is a diagram showing the content of the circuit for predicting a partial quotient;

Figure 5 is a block diagram of one embodiment of a nonrestoring divider apparatus according to the present invention;

Figure 6 is a diagram showing an improvement of the mutiplier shown in Figure 5;

Figure 7 is a diagram showing the content of the circuit for predicting a partial quotient shown in Figure 5;

Figures 8A and 8B are diagrams showing the logic states of the decoder shown in Figure 5; and

Figures 9A and 9B are diagrams showing another embodiment of the content shown in Figure 7.

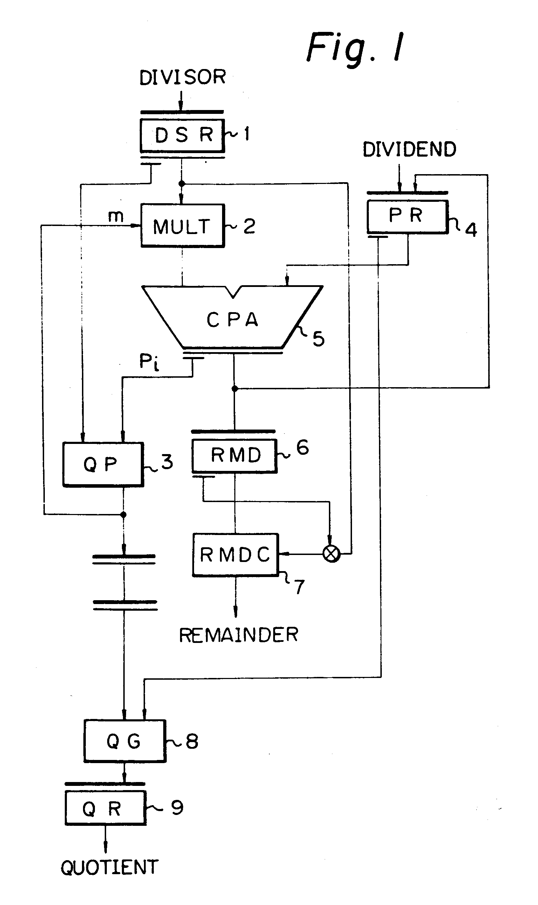

Figure 1 is a block diagram of one example of a conventional restoring divider comprising a divisor register (DSR) 1 in which a divisor is stored and the divisor is fed to a multiplier (MULT) 2. The multiplier 2 receives a partial quotient predicting signal (hereinafter shown as "m") from a partial quotient predictor (QP) 3 and forms dividends by multiplying the divisor by -15, -14, -13, ..., -2, -1, 0, +1, +2, ..., +14, +15 when the radix is 16. Note, in this circuit a method in which whole multiples are previously formed and selected, a method which uses a general adder, or a method which calculates by using a smaller number of divisor registers than the radix and multi-stage carry/save adders can be used.

In a partial remainder register (PR) 4, after the dividend is set at the first operation cycle, a new partial remainder is set at every operation cycle. A carry propagate adder (CPA) 5 carries out the addition of the partial remainder register 4 and a divisor multiplied by m ($-15 <= m <= +15$: where m is an integer), and the result thereof is output to the partial quotient register 4, the partial quotient predictor 3, and a remainder register 6.

The remainder register 6 holds the final predicted remainder for the repetition operation, and after the adding and subtracting operations are repeated, a correct quotient is output via a remainder corrector (RMDC) 7. In a concrete correcting method in the remainder corrector (RMDC) 7, when a sign bit of the remainder register (RMD) 6 is negative, the complement of 2 is determined as the quotient, and when the sign bit of the remainder register 6 is positive, the value is determined as the quotient.

A partial quotient generator (QG) 8 compares the output of the partial quotient predicting circuit (QP) 3 and the sign bit of the partial remainder register (PR) 4, so that a correct partial quotient is determined and stored in a quotient register (QR) 9.

The partial quotient predicting circuit (QP) 3, calculates the value of m in m x DSR to be calculated next from the output of the carry propagate adder (CPA) 5 (hereinafter referred to as CPA) and the output of the divisor register (DSR) 1 (hereinafter referred to as DSR). Logically, the circuit (QP) 3 uses the entries in the above-mentioned CPA and DSR to retrieve the table for m.

However, when the CPA and DSR are used in this way, the table is extremely large. For example, in the nonrestoring dividing operation having a radix of 16, including the sign bit, the following table will be formed:

CPA:     6 bits (64 entries)
DSR:     9 bits (256 entries)

wherein, as shown hereinafter, it is normalized so that the most significant bit becomes 1.

Therefore, in practice, the CPA and m are used as the entry, and the DSR table is formed, in such a manner that the table is reversely retrieved. In the table mentioned above, m becomes 5 bits including the sign, CPA becomes 6 bits including the sign, and as mentioned above, the size of the table becomes 64 x 32 entries, so that the size of the table is decreased to about 1/8. Referring to the adding and subtracting result (CPA) = 0, the table above is almost symmetrical, and the possibility of retrenchment is included.

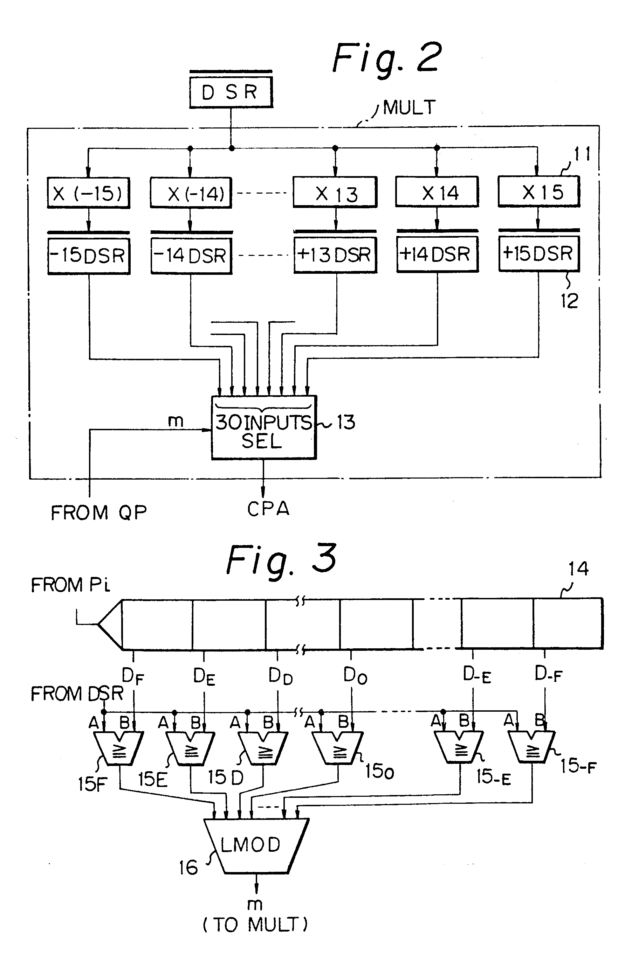

Figure 2 is a diagram showing the principle of the multiplier shown in Fig. 1. In Fig. 2, 11 designates multiply circuits [x(-15) ~ x15], 12 designates divisor registers (-15DSR ~ +15DSR), and 13 designates a selector. In the conventional system, when the radix is 16, thirty kinds of multiplier registers -15x divisor, -14x divisor, ... , -2x divisor, -1x divisor, 2x divisor, ... , 14x divisor, 15x divisor are necessary. These thirty kinds of data are formed by the multiply circuits [x(-15), ... , x15] 11, the outputs are held in the divisor registers (-15DSR ~ +15DSR) 12, and the outputs of the divisor registers 12 are supplied to the selector 13. In the selector 13, the values held in the registers 12 are selected by the signal m, that is, one of the multiple thirty kinds of data is selected.

Figure 3 is a diagram showing a principle of the partial quotient predicting circuit shown in Fig. 1. In Fig. 3, the six upper bits of the carry propagating adder 5 are supplied to a memory 14 as an address, and in the memory 14, the contents are divided into thirty one groups each having 9 bits, that is $D_F$ , $D_E$ , ... , $D_O$ , $D_{-1}$ , $D_{-2}$ ... $D_{-F}$. The divided values $D_F$ , $D_E$ , ... , $D_O$ , $D_{-1}$ , ... , $D_{-F}$ are supplied to comparators $15_F$ ... $15_O$ , ... $15_{-F}$. Further, the upper five bits of the divisor (DSR) is supplied to other input terminals of the comparators $15_F$ ~ $15_O$. In the comparators $15_F$ ~ $15_O$ , the input is formed by a 9 bit signal, the output thereof is a one bit signal. When the inputs have the relationship $A \geq B$, the output becomes "1", and when the inputs have the relationship A B, the output becomes "0". In Fig. 3, 16 is a circuit for detecting the left most "1" bit. The next value of m is then set to the value F,E...0,$^-$1,...$^-$F corresponding to the location of the left most 1 bit.

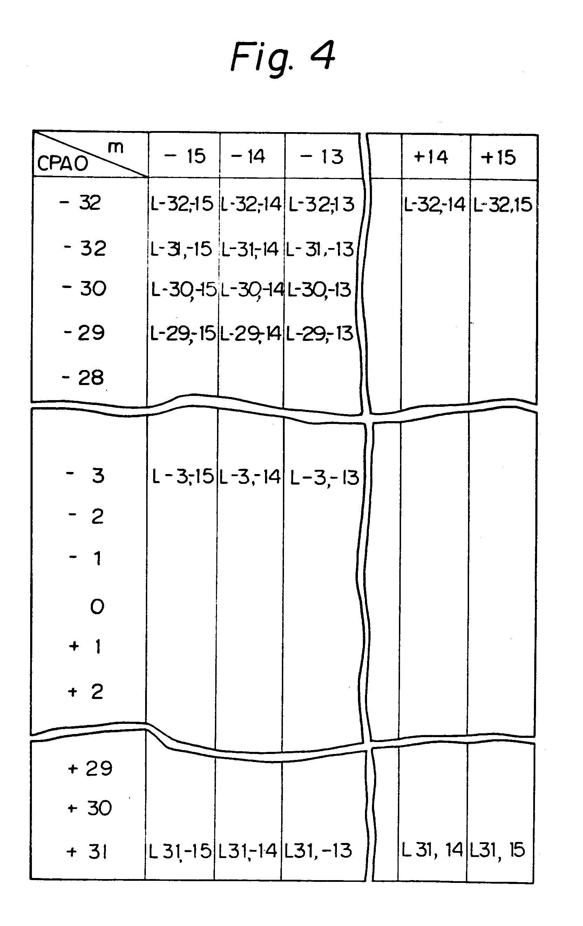

Figure 4 shows a precise table which logically replaces elements 14 - 16 of Figure 3 and which receives the CPA and m as entries and designates the (DSR) 1. The table shown in Figure 4 has 64 x 31 entries. In Figure 4, CPAO shows the value at which the upper 6 bits (including the sign) of CPA output are extracted and designates the decimal number, and m is the signal of the partial quotient predicting circuit (QP) 3 designated by the decimal number.

Such table look up system can be replaced by a random logic circuit which performs the same function.

The CPAO row m column in the partial quotient predicting table [QPT(CPAO, m)] designates the logical function whereby the upper 9 bits of the DSR (hereinafter referred to as DSRO) are input, and this logic function (hereinafter referred to as [LcpaO, m(DSRO)]) has the value "1" or "0", . The table requires the number corresponding to each 9 bits, i.e., Figure 4 requires the number of $2^9$:9 bits.

For the purpose of simplifying the explanation, it is assumed that the DSR 1 is normalized so that it is a positive integer and the most significant bit becomes 1.

First, the principle of the nonrestoring divider will be explained. When the divisor is D, the dividend is Pn, the partial remainder is Pn, and the partial quotient predicting signal is m; then the dividing operation in the nonrestoring divider is expressed by the following asymptotic equation,

$$P_{n+1} = P_n + m \times D$$

and in the $n + 1$'th quotient $Q_{n+1}$, it is sufficient that the partial quotient satisfies the following condition,

$$-D < P_n + m \times D < D$$

Therefore, the logic function "LcpaO, m(DSRO)" has the following conditions.

1 This logic function "LcpaO, m(DSRO)" becomes 1 when the dividing condition

$$-D < P_n + m \times D < D$$

is satisfied for all D, P which satisfy

$$DSRO <_= D < DSRO + \delta \text{ [wherein } \delta = (1/2)^8]$$
$$CPAO <_= P < CPAO + \epsilon \text{ (wherein } \epsilon = 1],$$

and this function becomes 0, except for the above,

② When the following relationship exists between m and m'

If LcpaO, m (DSRO) = LcpaO, m' (DSRO) = 1, one is made "O" and the other is made "1" i.e. uniquely determined.

③ The condition wherein the partial quotient predicting table formed by using the process mentioned above functions is that where one m exists for all CPAO, DSRO, and the following equation is satisfied for such an m

$$LcpaO, m(DSRO) = 1$$

This condition may be said to be "CONDITION I".

The partial quotient predicting table formed by above-mentioned method is shown in Fig. 4. In Fig. 4, when a DSRO having 9 bits is input, only one m exists for all CPAO (64 bits) and the corresponding logic function is

$$LcpaO, m(DSRO) = 1.$$

If the DSRO is 8 bits, only one m exists for all CPAO and the condition:

$$LcpaO, m(DSRO) = 1$$

is not satisfied, so that the table does not function as the partial quotient predicting table.

Further, if the DSRO is 10 bits, it becomes redundant since only one m exists for all CPAO. Therefore, when the DSRO is 9 bits, this may be said to be the most suitable number of bits in the DSRO for retrieving m in the nonrestoring divider wherein the radix is 16.

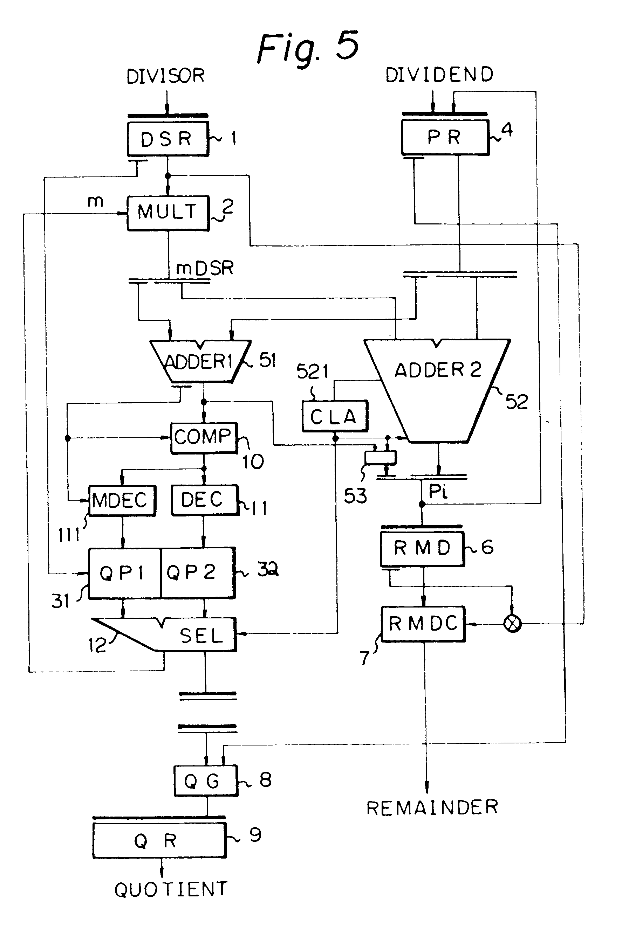

Figure 5 is a block diagram of one embodiment of the nonrestoring divider apparatus according to the present invention. In Fig. 5, the same symbols correspond to the same elements as shown in Fig. 1.

In Fig. 5, an adder 51 adds the upper bits of the partial remainder register (PR) 4 and the upper bits of output of the multiplier (MULT) 2 that is, the upper bits of mDSR without using the carry signal from an adder 52 (the output signal of the carry predicting circuit (CLA) 521), and the output thereof is supplied to a complement generator 10 and the remainder register (RMD) 6. The multiplier 2 is operatively connected to a divisor register 1 and a selector 12 the output of which corresponds to a predicted partial quotient (m).

In the complement generator 10, when the sign bit of the adder (ADDER 1) 51 is "1", the complement of the input data (output of the adder 51) is output to the decoder 11, and when the sign bit is "0", the input data is directly output to the decoder 11.

In the decoder 11, the result obtained from the complement generator (COMP) 10 is decoded and supplied to the partial quotient predicting circuit (QP2) 3.

An adder (ADDER 2) 52 receives the lower bits of the partial remainder register (PR) 4 and the lower bits of the output (mDSR) of the multiplier (MULT) 2, and a carry look-ahead circuit (CLA) 521 is attached thereto for the purpose of carrying out high speed operations.

The output of the adder 51 is also input to a carry adding circuit 53 and compensated by the output of CLA 521 and fed to RMD6 by being concatenated with the output of adder 52.

The characteristic feature of the present invention is to provide new functional blocks, that is, a modified decoder circuit (MDEC) 111, the selector (SEL) 12, and a partial quotient predicting circuit (QP1) 31 having the same function as that of the partial quotient predicting circuit (QP) 3 explained in Figure 1 to Figure 4.

The basic operation of the apparatus shown in Figure 5 is similar to the conventional system, therefore, only the characteristic feature of the present invention will be explained hereinafter.

First, the modified decoder circuit (MDEC) 111 decodes when a carry exists by adding "1" to the number from the adder 51 when the sign bit of the adder (ADDER 1) 51 is "0" (positive) and subtracting "1" from the number from the adder 51 when the sign bit of the adder 51 is "1" (negative). The selector 12 selects either the partial quotient predicting circuit (QP1) 31 or (QP2) 32 by using the output signal of the carry predicting circuit (CLA) 521.

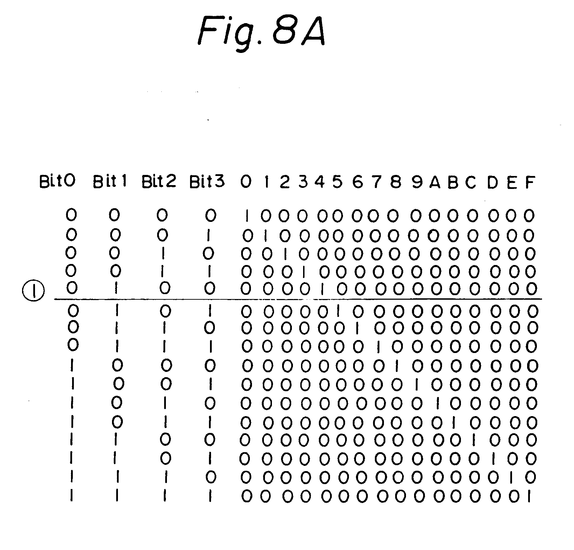

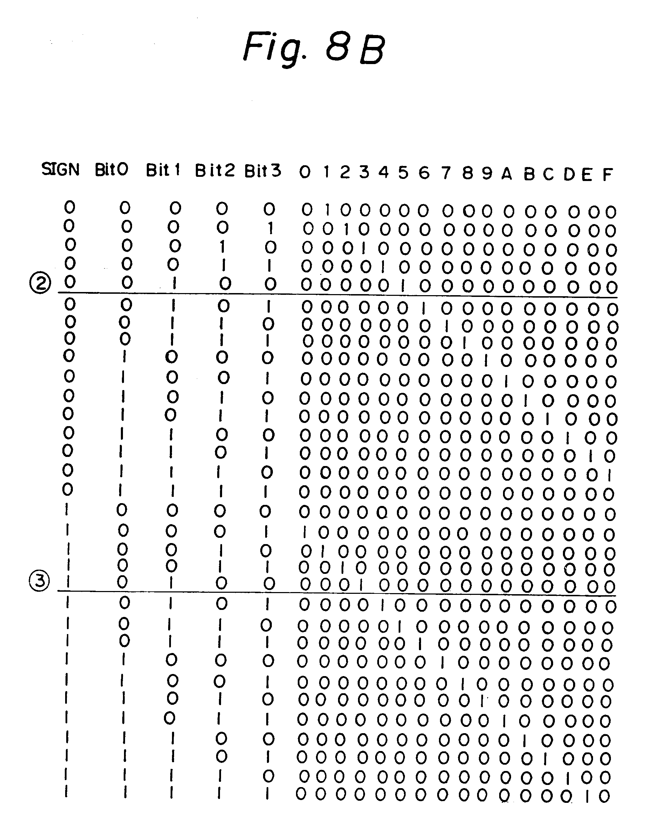

Concretely, when the output of the carry predicting circuit (CLA) 521 is "1" (that is, a carry exists), the selector 12 selects the partial quotient circuit (QP1) 31, and where the output of the circuit (CLA) 521 is "0" (that is, no carry exists), the partial quotient circuit (QP2)32 is selected. The function of the modified decoder circuit (MDEC) will be explained in detail later referring to Figs. 8A and 8B.

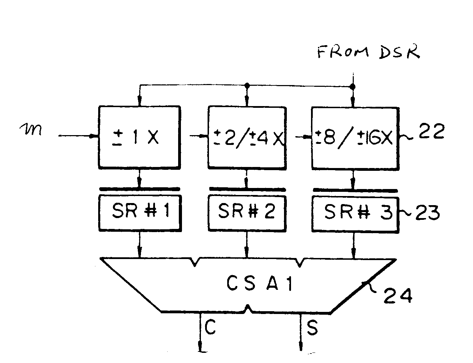

Figure 6 is a block diagram of an alternative construction of the multiplier circuit 2.

In Fig. 6, 22 designates multipliers ($\pm$1x, $\pm$2/$\pm$4x, $\pm$8/$\pm$16x) which are formed by a complement circuit and a shifter, wherein multiplication in the + side is achieved by shift only and multiplication in the - side is achieved by using the complement; 23 designates divisor registers (SR #1, SR #2, SR #3); 24 and 25 carry save adders (CSA1, CSA2) having three inputs; C designates a carry signal; and S designates a sum signal.

In the circuit shown in Fig. 6, the divisor registers 23 [corresponding to (+15DSR ~ -15 DSR) in Fig. 2] are formed by three registers (SR #1 ~ SR #3) the number of which is smaller than the number of bits (4), and the outputs of three registers SR #1, SR #2, SR #3 are added by using one carry/save adders 24 having three inputs.

The predicting signal (m) selects a plurality of routes by which the output of the divisor register 1 is multiplied by the adders 22 ($\pm$1x, $\pm$2/$\pm$4x, $\pm$8/$\pm$16x), and the outputs thereof are set in the divisor registers (SR #1, SR #2,

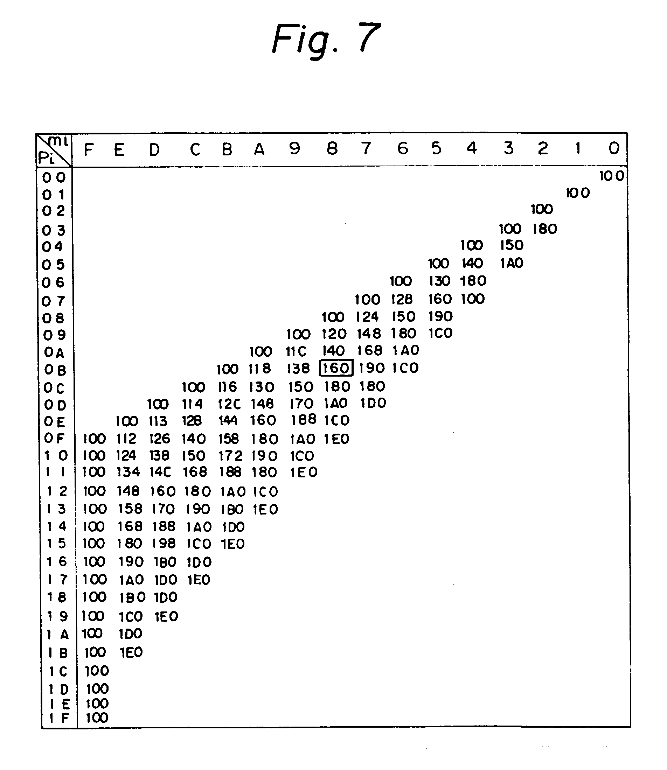

Fig. 7 is a diagram showing one embodiment of the partial quotient predicting table according to the present invention.

First, the concept of the present invention will be explained. At the i'th step of the non-restoring division, the following equations are used.

$$P_{i+1} = P_i - m_i \times d \qquad ①$$

$$-d < P_{i+1} < d \qquad ②$$

wherein pi designates a partial remainder, d is a divisor, r is a radix, and when the radix is r, mi is expressed as

-r + 1 ≤ $m_i$ ≤ r - 1

The value $m_i$ is selected so that the value of $P_{i+1}$ obtained by calculating the equation ① satisfies the equation ②, and the equation ① is calculated by using the selected $m_i$.

In the actual computer, at the best case, the upper bits of $P_i$ and d [corresponded to $P_i$ in CPA and D in DSR] are extracted by digits sufficient to ensure accuracy in determining $m_i$, the value of $m_i$ is determined by using the partial quotient predicting table, and thereafter precise $P_{i+1}$ is calculated by using equation ①.

As an operation for $m_i$ x d, a method for using the multiplier, a method for using a divisor register at every multiple, a method for using carry/save adders, etc., are well known and the subtraction $p_i$ - $m_i$ x d is carried out by using a well known adding and subtracting circuit, etc.

The feature of the present invention lies within the carrying out of the function of determining $m_i$ which satisfies the equation ② from $P_i$ and D above by using the smallest possible amount of hardware.

As mentioned above, when $P_i$, D are fixed, a plurality values of $m_i$ exist which satisfy the equations ①, ② at the same time.

When the quotient sets in the nonrestoring divider is x [ = (-r, -r + 1, ... , -1, 0, 1, ... , r - 1 , r) wherein r is a radix], the set $M(P_i, D)$ of $m_i$, which satisfies the equations ①, ② at the i'th step, is a partial set of X, and usually a plurality of elements exist. That is,

$M(P_i, D) \subset X$     ③

Furthermore N is specified as the mapping which is mapped from a subset of X and in which the sign of each element is inverted. That is, when

$A \subset x, B \subset X,$

then

$[N(A) = B] \rightleftarrows [x \in A \rightleftarrows -x \in B$ for all x's].

When the complement of $P_i$ is shown by $\overline{P}_i$, $M(P_i, D)$ and $N[M(\overline{P}_i, D)]$ have a common portion, but they are not coincident. That is, generally,

$M(P_i, D) \neq N[M(\overline{P}_i, D)]$     ④

$M(P_i, D) \cap N[M(\overline{P}_i, D)] \neq \phi$     ⑤

In the above mentioned equation, when the common portion is set as M',

$M'(P_i, D) = M(P_i, D) \cap N[M(\overline{P}_i, D)]$

In other words, when $P_i \geq 0$, a suitable mi is determined by selecting one element from $M'(P_i, D)$, and when $P_i < 0$, a suitable $m_i$ is determined by selecting one element from $N[M'(P_i, D)]$.

Therefore, when the system of the present invention is used, the table which determines $m_i$ from any $P_i$ and D is provided only for $P_i \geq 0$, so that the size of the table can be reduced by about one-half.

The above-mentioned will be explained by using the example of the nonrestoring division by which the quotient having 4 bits (that is radix r = 16) is obtained in one cycle time (one step).

When r = 16, for the purpose of determining $m_i$, $P_i$ requires 6 bits including the sign and D requires 9 bits (however, for the purpose of simplicity, it is previously normalized so that D is positive and the most significant bit is "1").

Further, the following relationship exists between the accuracies of the $P_i$, D mentioned above. That is, when one is rough, the other requires high accuracy. The above relationship, that is, $P_i$ = 6 bits and D = 9 bits, is one combination relating to that relationship.

As a concrete example of the $P_i$ and D mentioned above, when

   $P_i$ =    001011 (upper 6 bits)
   D =    110000000 (upper 9 bits)
it is known that in the value of $m_i$ which satisfies the above equations ①, ②, two values exist, that is, 7 and 8. That is,

$M(P_i, D) = \{7, 8\},$

and similarly, it is known that

$M(\overline{P}_i, D) = \{-8\}$

Then, from the definition of the mapping mentioned above, it may be said that

$N[M(\overline{P}_i, D)] = \{8\}$

and

$M(P_i, D) \neq N[M(\overline{P}_i, D)]$

and further

$M'(P_i, D) = M(P_i, D) \cap N[M(\overline{P}_i, D)] = \{8\}$

If, by providing the table of $M'(P_i, D)$, the upper bits $P_i$ of the input $P_i$ are "001011" = $(P_i)_a$ (that is $P_i \geq 0$)

$P_i$ is

$P_i = (P_i)_a$

therefore,

$M(P_i , D) = M[(P_i)_a , D] = \{7, 8\}$

and

$M'((P_i)_a , D) = M'(P_i , D) = \{8\}$

and then, if

$M'(P_i,D) \subset M(P_i,D) = \{8\}$

therefore,

$8 \in M(P_i,D)$

Similarly, when

$'110100' = (P_i)_b$ (that is, $P_i < 0$),

if $P_i$ is set as

$\overline{P}_i = (P_i)_b$

it becomes

$(\overline{(P_i)_b}) = P_i = '001011' = (P_i)_a$

and

$M'((P_i)_b , D) = M'(\overline{P}_i , D)$

On the other hand,

$N[M(\overline{P}_i , D)] \supset M'(P_i , D) = \{8\}$

therefore,

$8 \in N[M(\overline{P}_i,D)]$

Accordingly, in accordance with the definition of the mapping, the following relationship can be obtained:

$-8 \in M(\overline{P}_i,D) = M[(p_i)_b,D]$

Also, when $P_i < 0$, the same result as that calculated above is obtained by the table of $M'(P_i , D)$. Therefore, it is known that the correct result can be obtained even if such a table is used.

To summarize the above-mentioned explanation concerning the concept of the present invention, the following relationship exists between the partial sets $M(P_i , D)$ and $M(\overline{P}_i , D)$ of the quotient set X,

$M(P_i , D) \neq N[M(\overline{P}_i , D)]$
$M(P_i , D) \cap N[M(\overline{P}_i , D)] = M'(P_i , D) \neq \phi$

and,

$M'(P_i , D) \subset M(P_i , D)$
$M'(P_i , D) \subset N[M(\overline{P}_i , D)]$

Therefore, when set as $a \in M'(P_i,D)$ it becomes

$a \in M(P_i,D)$
$a \in N[M(\overline{Pi},D)]$

that is,

$-a \in M(\overline{P}_i,D)$

Thus, the elements of the partial sets $M(P_i , D)$, $M(\overline{P}_i , D)$ can be obtained by providing one table of $M'(P_i , D)$.

Figure 7 shows the table in which the relation-ship between $P_i$ , D, and $m_i$ is obtained by using the above-mentioned principle and which is used by QP1 and QP2.

In Fig. 7, $m_i$ is 4 bits, $P_i$ is 5 bits without a sign, D is 9 bits (however, it is normalized so that the most significant bit becomes "1"), and several discontinuous points exist therebetween. However, it is known that a comparative continuous relationship exists, that is, when D increases, $m_i$ decreases.

As mentioned above, the process for determin-ing $m_i$ logically corresponds to the retrieval of the table which uses $P_i$ and D as entries to determine the value of $m_i$. As $P_i$ becomes 6 bits including the sign, a table must be formed having 64 entries x 256 entries, and this is not practical.

Therefore, it is considered that the construction of the table which uses $P_i$ , $m_i$ as entries and the range for D as elements as shown in Fig. 7 is the most efficient.

In the table shown in Fig. 7, the upper 5 bits of $P_i$ are designated as a hexadecimal number, the 4 bits of $m_i$ are designated as a hexadecimal number, and the upper 9 bits (wherein the most significant bit is "1") of D are designated as a hexadecimal number. The upper 9 bits of D designates a lower limit value for the elements entry.

Therefore, when the elements of the table are

$T_{pi} , m_i$

the range of D which satisfies the following relation-

ship

$$M_i \in M'(P_i, D)$$

is determined by following:

$$T_{P_i}, m_i \leq D \leq T_{P_i}, (m_{i-1})^{-1}$$

As a concrete example, when $P_i$ = '001011' is designated as a hexadecimal number without a sign, it becomes '0B'(H), and similarly, D = '110000000' becomes '180'(H). Therefore, in the table, as
T'0B', 8 ≤ D ≤ T'0B', 7-1 (shown by thick line frame)
and referring to the following relationship

$$160_H \leq 180_H \leq 18F_H$$

it is known that the value to be determined is '8'.
When the following relationship is given

$$P_i = (P_i)_b = '110100'$$

the sign is negative, so that '001011' is obtained as the complement of $(P_i)_b$. Therefore, 0B' excepting the sign can be designated as a hexadecimal number, and the entry is the same as mentioned above, and thus $m_i$ = 8 is obtained. Finally, the sign is adjusted, and '-8' is obtained as a true predicting partial quotient.

Fig. 8A shows one example of the function of the usual decoder (DEC) 11 shown in Fig. 5 and the function of the modified decoder (MDEC) 111 shown in Fig. 5.

The example of the operation of the invention by which the partial quotient predicting signal m is output when the output data of the adder 51 [that is, the upper digit of $PR_i$ + mDSR] is positive and negative.

[Example 1]

When the output data of the adder 51 is '00100' the sign bit of the data is "0" (positive). When a carry is not output from the carry predicting circuit (521), and the output of the decoder 11 [that is the decoded output which makes the line 4 (see Fig. 8A) to an ON state, shown by ① in Fig. 8A] is supplied to the partial quotient predicting circuit 32. When a carry is output from the carry predicting circuit (521), it is predicted that the above-mentioned output data from adder 51 will become '00101' and the selector 12 exerts a control through the carry from the carry predicting circuit 521 so that the output of the modified decoder circuit including the sign [shown in ② in Fig.

8B, that is, the output which places the line 5 (see Fig. 8B) to an ON state] is supplied to the partial quotient predicting circuit 31. Thus, the correct partial quotient predicting signal m is obtained.

[Example 2]

When the output data of the adder 51 is '11011', the sign bit of the data is "1" (negative). Therefore, according to the logic disclosed in the prior Japanese Unexamined Application No. 59-070353, the output of the adder 51, that is the ones complement, is supplied to the decoder circuits 11 and 111, and the absolute value of the partial quotient predicting signal m is output.
Therefore, in this case, if no carry from the carry predicting circuit 521 exists, the complement of 1 of the data '1011' excepting the sign is '0100'. Then the output [shown in ① on Fig. 8A, that is, the decoded output which places the line 4 to an ON state] of the decoder 11 corresponding to the complemental output is supplied to the partial quotient predicting circuit 32. If a carry is output from carry predicting circuit (521), the original data becomes '11100' and then it is predicted that the complemental output will become '0011'. Then the selector 12 exerts control through the carry from the carry predicting circuit 521 so that the output of the modified decoder circuit (111) including the sign [shown in ③ on Fig. 7B, that is, the output which places the line 3 to an ON state] is supplied to the partial quotient predicting circuit 31. Thus, the correct partial quotient predicting signal m is obtained.
As mentioned above, the characteristic feature is that the modified decoder 111 forms the decode signal by adding "1" to the number from the adder 51 when the sign bit of the adder 51 is "0" positive and forms the decode signal by subtracting "1" from the number from the adder 51 when the sign bit thereof is "1" (negative), the output from the modified decoder 111 being used when a carry exists.

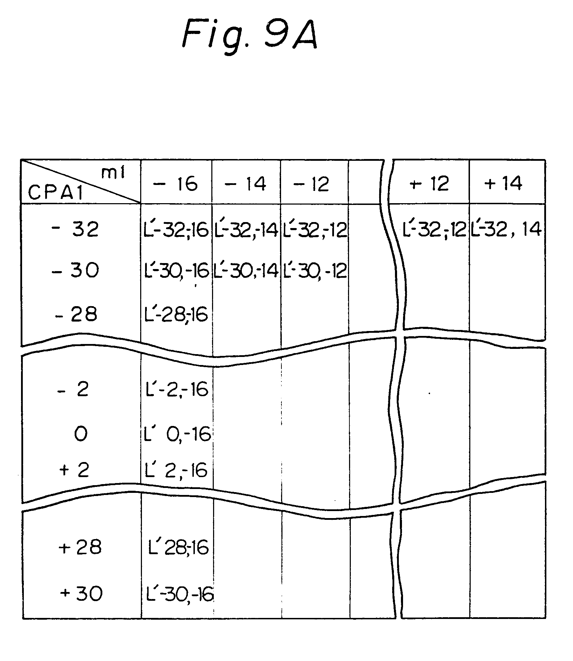

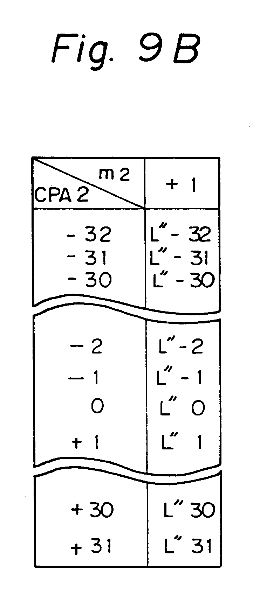

Figures 9A and 9B are an alternative to the example shown in Fig. 7.
In the table shown in Fig. 4, the CPAO is 6 bits (64 entries), the obtained m is 5 bits including the sign (32 entries), and the radix is 16. However, also when m is 4 bits including the signal (expressed by ml), $\delta = (1/2)^5$ [that is, the table is formed by inputting the upper 6 bits (DSR1) of the DSR] and $\epsilon$ = 2 [the CPA is 4 bits (CPA1) including the sign], the table which satisfies the table shown in Fig. 4, (that is, the CONDITION I above) can be obtained.
This table shown in Figure 4 can be revised into a rough portion shown in Fig.9A and a correcting table shown in Figure 9B. Thus, when the portion corresponding to add number m in the precise portion of the partial quotient predicting table shown in Fig. 4 is "1", the value ml smaller by "1" than in the table shown in Fig. 4 is obtained in the table shown in Fig. 9A.

Therefore, for the purpose of correcting the error, when "1" exists in the portion for the odd number m in the table shown in Fig. 4, the precise m can be obtained by storing its information as another correcting table and by referring to the same. Figure 9B is a table which schematically shows the above mentioned correcting table.

Hereinafter, the correcting method will be concretely explained.

First, referring one column CPA1 = -30 in the rough portion of the quotient predicting table, when, for example,

L' -30, -14 = 1

and, in the correcting table, the corresponding column (that is, CPA2 = -30) is

L" -30 = 1

the correction is carried out to the value corresponding to the odd number m (that is, m = -13), that is

L' -30, -13 = 1.

When the corrected value in the same column is

L" -30 = 0

this shows that "1" does not exist at any portion for the odd number m for CPA0 = -30. Therefore, in the rough portion of quotient predicting table, for example,

L' -30, -14 = 1

is used as it stands as the precise portion of quotient predicting table.

Further, when in one column in CPA1 = -30 in the rough portion of the quotient predicting table, for example,

L' -30, -14 = 1

and in the column in CPA2 = -29 in the correcting table,

L" -29 = 1,

the correction is carried out to the value corresponding to the odd number m (i.e., corresponding to m = -13), that is

L' -29, -13 = 1.

That is, when L" -30 = 1 in the correcting table, it shows that, in the column corresponding to CPA0 = -30 in the precise portion of quotient predicting table shown in Fig. 4, one "1" exists at any portion for the odd number m. This is retrieved from the rough portion of quotient predicting table shown in Fig. 9A, and when as mentioned above,

L' -30, -14 = 1

it is determined that

L' -30, -13 = 1.

This is the gist of the present invention.
Therefore,

L' -30, -12 = 1

it becomes

L' -30, -11 = 1

and subsequent same operations are repeated.

The above-mentioned correcting table is formed by the above-mentioned condition, and each element thereof is expressed by the following equation.

L"cpa2, m2(DSR2) = ΣLcpa2, 2i+1(DSR2) = 1

wherein Σ shows the logical sum from i = -8 to i = +7, cpa2 is the upper 6 bits including the sign in the output of the carry propagate adder, and DSR2 is the upper 9 bits of the dividend.

The correcting table formed by the equation showing the condition mentioned above is shown in Fig. 9B.

According to the present invention, the same function as shown in the precise portion the quotient predicting table shown in Fig. 4 can be realized by the rough portion of the quotient predicting table shown in Fig. 9A and the correcting table shown in Fig. 9B, so that it is recognized that the amount of hardware needed can be decreased.

In the explanation above, CPA and m are used as the entry of the partial quotient predicting table, however, m can be placed to the value coded by using a plurality of desired values from -16 to +15, to form an effective signal in the subsequent process.

**Claims**

1. A non-restoring divider apparatus including a divisor register (1) for storing a divisor; a partial remainder register (4) for storing a dividend or a partial remainder; prediction means (31,32) for predicting a partial quotient (m); a multiplier (2) operatively connected to the divisor register (1), for multiplying the content of the divisor register (1) by a multiplying factor constituted by the partial quotient (m) from the prediction means; a first adder (52) for subtracting the output of the multiplier (2) from the content of the partial remainder register (4) and for calculating a new partial remainder, the prediction means (31,32) predicting the partial quotient (m) from upper digits of the divisor register (1) and upper digits of the partial remainder; and a quotient correction circuit (8,9) for determining the true value of the quotient in response to the predicted partial quotients, wherein the prediction means repeats a cycle which sets the output of the adder (52) at the partial remainder register (4) so as to carry out the division; characterised by a second adder (51), operatively connected to the multiplier (2) and the partial remainder register (4), for determining the difference between the upper digits of the multiplier (2) and the upper digits of the partial remainder register (4); carry predicting means (521) operatively connected to the first adder (52), for determining a carry to be propagated to the second adder (51) from the first adder (52), the carry being determined from remainder digits of the multiplier (2) and remainder digits of the partial remainder register (4); adecoder (11) operatively connected to the second adder (51) for decoding the output from the second adder (51), a modified decoder (111) operatively connected to the second adder (51) for decoding the output of the second adder (51) dependant upon whether the sign bit of the output from the second adder is positive or negative, wherein the modified decoder (111) decodes the signal on the assumption that a carry is provided by the carry predicting means connected to the first adder and the decoder decodes on the assumption that there is no carry; in that the prediction means comprise a first predictor (QP1 31) operatively connected to the modified decoder (111) for predicting the partial quotient (m) from a corrected output of the second adder (51) and the upper digits of the divisor register (1); and a second predictor (QP2 32) operatively connected to the decoder (11) for predicting the partial quotient (m) from the output of the second adder (51) and the upper digits of the divisor register (1); and selector means (12) for selecting either the output of the first predictor (31) or the output of the second predictor (32) dependent upon the output of the carry predicting means (521) thereby making the output of the selecting means (12) correspond to a predicted quotient which constitutes the multiplying factor applied to the multiplier (2).

2. Apparatus according to claim 1, wherein the first predictor (31)/second predictor (32) outputs a positive partial quotient (m) when the output of the second adder (51) is positive, and a negative partial quotient (m) when the output of the second adder is negative, and wherein the quotient correcting circuit (8) corrects the predicted partial quotient (m) by using the sign of the partial remainder formed by the partial quotient so as to determine a true value of the quotient.

3. Apparatus according to claim 2, further comprising a circuit (10) by which when the output of the second adder (51) is + (or -), the value is not changed and when the output of the second adder is - (or +), the complemental value is determined.

4. Apparatus according to claim 3, characterised in that each circuit (31,32) for determining the partial quotient further comprises means for outputting partial bits of the partial quotient by using partial bits of the output of the complemental value determining circuit (10) and means for outputting remainder bits of the partial quotient by using whole bits of the output of said determining circuit (10).

5. Apparatus according to claim 2, characterised in that the first predictor (31)/ second predictor (32) comprise means for outputting partial bits of the partial quotient by using partial bits of the output of the second adder (51) and means for outputting remainder bits of the partial quotient by using whole bits of the output of the second adder.

6. Apparatus according to any one of claims 1 to 5, characterised in that the multiplier comprises a shift circuit (22) which generates the values multiplying the value of the divisor register by $\pm 1$, $\pm 2$, $\pm 4$, ...$\pm 2^i$; means (23) for selecting the combination of the multiples in accordance with the value of the partial quotient; and an adder (24) for adding the selected multiples.

**Revendications**

1. Appareil diviseur non restituant incluant un registre de diviseur (1) pour stocker un diviseur ; un registre de reste partiel (4) pour stocker un dividende ou un reste partiel ; un moyen de prédiction (31, 32) pour prédire un quotient partiel (m) ; un multiplicateur (2) connecté de manière fonctionnelle au registre de diviseur (1) pour multiplier le contenu du registre de diviseur (1) par un facteur multiplicatif constitué par le quotient partiel (m) qui provient du moyen de prédiction ; un premier additionneur (52) pour soustraire la sortie du multiplicateur (2) du contenu du registre de reste partiel (4) et pour calculer un nouveau reste partiel, le moyen de prédiction (31, 32) prédisant le quotient partiel (m) à partir d'éléments numériques supérieurs du registre de diviseur (1) et à partir d'éléments numériques supérieurs du reste partiel ; et un circuit de correction de quotient (8, 9) pour déterminer la vraie valeur du quotient en réponse aux quotients partiels prédits, dans lequel le moyen de prédiction répète un cycle qui établit la sortie de l'additionneur (52) au niveau du registre de reste partiel (4) de manière à effectuer la division ; caractérisé par un second additionneur (51), connecté de manière fonctionnelle au multiplicateur (2) et au registre de reste partiel (4), pour déterminer la différence entre les éléments numériques supérieurs du multiplicateur (2) et les éléments numériques supérieurs du registre de reste partiel (4) ; un moyen de prédiction de retenue (521) connecté de manière fonctionnelle au premier additionneur (52) pour déterminer une retenue qui doit être propagée jusqu'au second additionneur (51) à partir du premier additionneur (52), la retenue étant déterminée à partir des éléments numériques de reste du multiplicateur (2) et des éléments numériques de reste du registre de reste partiel (4) ; un décodeur (11) connecté de manière fonctionnelle au second additionneur (51) pour décoder la sortie qui provient du second additionneur (51), un décodeur modifié (111) connecté de manière fonctionnelle au second additionneur (51) pour décoder la sortie du second additionneur (51) selon que le bit de signe de la sortie qui provient du second additionneur est positif ou négatif, dans lequel le décodeur modifié (111) décode le signal dans l'hypothèse qu'une retenue est fournie par le moyen de prédiction de retenue qui est connecté au premier additionneur et le décodeur décode le signal dans le cas où il n'y a aucune retenue ; en ce que le moyen de prédiction comprend un premier prédicteur (QP1 31) qui est connecté de manière opérationnelle au décodeur modifié (111) pour prédire le quotient partiel (m) à partir d'une sortie corrigée du second additionneur (51) et à partir des éléments numériques supérieurs du registre de diviseur (1) ; et un second prédicteur (QP2 32) qui est connecté de manière opérationnelle au décodeur (11) pour prédire le quotient partiel (m) à partir de la sortie du second additionneur (51) et à partir des éléments numériques supérieurs du registre de diviseur (1) ; et un moyen de sélecteur (12) pour sélectionner soit la sortie du premier prédicteur (31), soit la sortie du second prédicteur (32), en fonction de la sortie du moyen de prédiction de retenue (521), ce qui fait ainsi que la sortie du moyen de sélection (12) correspond à un quotient prédit qui constitue le facteur de multiplication qui est appliqué au multiplicateur (2).

2. Appareil selon la revendication 1, dans lequel les premier prédicteur (31)/second prédicteur (32) émettent en sortie un quotient partiel positif (m) lorsque la sortie du second additionneur (51) est positive et un quotient partiel négatif (m) lorsque la sortie du second additionneur est négative, et dans lequel le circuit de correction de quotient (8) corrige le quotient partiel prédit (m) en utilisant le signe du reste partiel formé par le quotient partiel de manière à déterminer la vraie valeur du quotient.

3. Appareil selon la revendication 2, comprenant en outre un circuit (10) par lequel, lorsque la sortie du second additionneur (51) est de signe + (ou de signe -), la valeur n'est pas changée et lorsque la sortie du second additionneur est de signe - (de signe +), la valeur de complément est déterminée.

4. Appareil selon la revendication 3, caractérisé en ce que chaque circuit (31, 32) pour déterminer le quotient partiel comprend en outre un moyen pour émettre en sortie des bits partiels du quotient partiel en utilisant des bits partiels de la sortie du circuit de détermination de valeur de complément (10) et un moyen pour émettre en sortie des bits restants du quotient partiel en utilisant tous les bits de la sortie dudit circuit de détermination (10).

5. Appareil selon la revendication 2, caractérisé en ce que les premier prédicteur (31)/second prédicteur (32) comprennent un moyen pour émettre en sortie des bits partiels du quotient partiel en utilisant des bits partiels de la sortie du second additionneur (51) et un moyen pour émettre en sortie des bits restants du quotient partiel en utilisant tous les bits de la sortie du second additionneur.

6. Appareil selon l'une quelconque des revendications 1 à 5, caractérisé en ce que le multiplicateur comprend un circuit de décalage (22) qui génère les valeurs qui multiplient la valeur du registre de diviseur par ±1, ±2, ±4, ..., ±2$^i$ ; un moyen (23) pour sélectionner la combinaison des multiples en fonction de la valeur du quotient partiel ; et un additionneur (24) pour additionner les multiples sélectionnés.

**Patentansprüche**

1. Vorrichtung zum Teilen ohne Bildung eines positiven Restes, mit:

einem Teilerregister (1) zum Speichern eines Teilers;

einem Teilrestregister (4) zum Speichern eines Dividenden oder eines Teilrests;

einem Voraussagemittel (31,32) zum Voraussagen eines Teilquotienten (m);

einem Multiplizierer (2), der wirkungsmäßig mit dem Teilerregister (1) verbunden ist, um den Inhalt des Teilerregisters (1) mit einem multiplizierenden Faktor zu multiplizieren, der aus dem Teilquotienten (m) von dem Voraussagemittel besteht;

einem ersten Addierer (52), um den Ausgang des Muliplizierers (2) vom Inhalt des Teilrestregisters (4) abzuziehen und um einen neuen Teilrest zu berechnen, wobei das Voraussagemittel ( 31,32) den Teilquotienten (m) aus den oberen Stellen des Teilerregisters (1) und den oberen Stellen des teilweisen Teilrestes voraussagt;

und einer Quotientenkorrekturschaltung (8,9), zum Bestimmen des wahren Wertes des Quotienten als Antwort auf den vorausgesagten Teilquotienten, wobei das Voraussagemittel einen Zyklus wiederholt, der den Ausgang des Addierers (52) auf das Teilrestregister (4) setzt, um so die Division auszuführen;

gekennzeichnet durch einen zweiten Addierer (51), der wirkungsmäßig mit dem Multiplizierer (2) und dem Teilrestregister (4) verbunden ist, um die Differenz zwischen den oberen Stellen des Multipliziers (2) und den oberen Stellen des Teilrestregisters (4) zu bestimmen;

einem Übertrag-Voraussagemittel (521), das wirkungsmäßig mit dem ersten Addierer (52) verbunden ist, um einen Übertrag, der von dem ersten Addierer (52) auf den zweiten Addierer (51) zu übertragen ist, zu bestimmen, wobei der Übertrag aus den restlichen Stellen des Multipliziers (2) und den restlichen Stellen des Teilrestregisters (4) bestimmt wird;

einen Dekodierer (11), der wirkungsmäßig mit dem zweiten Addierer (51) verbunden ist, um den Ausgang von dem zweiten Addierer (51) zu dekodieren, einen modifizierten Dekodierer (111), der wirkungsmäßig mit dem zweiten Addierer (51) verbunden ist, um den Ausgang des zweiten Addierers (51) zu dekodieren, abhängig davon, ob das Vorzeichenbit des Ausgangs vom zweiten Addierer positiv oder negativ ist, wobei der modifizierte Dekodierer (111) das Signal unter der Annahme dekodiert, daß ein Übertrag von dem Voraussagemittel vorgesehen wird, das mit dem ersten Addierer verbunden ist, und der Dekodierer unter der Annahme dekodiert, daß es keinen Übertrag gibt;

daß das Voraussagemittel ein erstes Voraussageglied (QP1 31) umfaßt, das wirkungsmäßig mit dem modifizierten Dekodierer (111) verbunden ist, um den Teilquotienten (m) aus einem korrigierten Ausgang des zweiten Addierers (51) und den oberen Stellen des Teilerregisters (1) vorauszusagen;

und ein zweites Voraussageglied (QP2 32), das wirkungsmäßig mit dem Dekodierer (11) verbunden ist, um den Teilquotienten (m) aus dem Ausgang des zweiten Addierers (51) und den oberen Stellen des Teilerregisters (1) vorauszusagen;

und ein Auswahlmittel (12), um entweder den Ausgang des ersten Voraussagegliedes (31) oder den Ausgang des zweiten Voraussagegliedes (32) in Abhängigkeit von dem Ausgang des Übertrag-Voraussagemittels (521) auszuwählen, und dadurch den Ausgang des Auswahlmittels (12) einem vorausgesagten Quotienten entsprechen zu machen, der den auf den Multiplizierer (2) angewandten multiplizierenden Faktor bildet.

2. Vorrichtung nach Anspruch 1, bei der das erste Voraussageglied (31) / zweite Voraussageglied (32) einen positiven Teilquotienten (m) ausgibt, wenn der Ausgang des zweiten Addierers (51) positiv ist, und einen negativen Teilquotienten (m) ausgibt, wenn der Ausgang des zweiten Addierers negativ ist, und bei der die Quotientenkorrekturschaltung (8) den vorausgesagten Teilquotienten (m) korrigiert, indem sie das Vorzeichen des Teilrestes benutzt, der durch den Teilquotienten gebildet wird, um so einen wahren Wert des Quotienten zu bilden.

3. Vorrichtung nach Anspruch 2, ferner mit einer Schaltung (10), durch die, wenn der Ausgang des zweiten Addierers (51) + (oder -) ist, der Wert nicht geändert wird, und wenn der Ausgang des zweiten Addierers - (oder +) ist, der komplementäre Wert bestimmt wird.

4. Vorrichtung nach Anspruch 3, dadurch gekennzeichnet daß jede Schaltung (31, 32) zur Bestimmung des Teilquotienten ferner Mittel enthält, um Teilbits des Teilquotienten durch Verwendung von Teilbits von dem Ausgang der den Komplementärwert bestimmenden Schaltung (10) auszugeben, und Mittel, um Restbits des Teilquotienten durch Verwendung ganzer Bits des Ausgangs besagter bestimmender Schaltung (10) auszugeben.

5. Vorrichtung nach Anspruch 2, dadurch gekennzeichnet, daß das erste Voraussageglied (31) / zweite Voraussageglied (32) Mittel enthält, um Teilbits des Teilquotienten durch Verwendung von Teilbits des Ausgangs vom zweiten Addierer (51) auszugeben, und Mittel, um Restbits des Teilquotienten durch Verwendung ganzer Bits des Ausgangs vom zweiten Addierer auszugeben.

6. Vorrichtung nach einem der Ansprüche 1 bis 5, dadurch gekennzeichnet, daß der Multiplizierer eine Verschiebeschaltung (22) enthält, die die Werte erzeugt, die den Wert des Teilerregisters mit $\pm 1$, $\pm 2$, $\pm 4$, ... $\pm 2^i$ multiplizieren; und Mittel (23) zur Auswahl der Kombinationen der Vielfachen entsprechend dem Wert des Teilquotienten; und einen Addierer (24) zum Addieren der ausgewählten Vielfachen.

# Fig. 1

# Fig. 2

```
                    ┌─────┐
                    │ DSR │
                    └──┬──┘
                                          MULT
     ┌──────────┬──────┬─────────────┬──────────┬──────────┐
 ┌───▼───┐  ┌───▼───┐           ┌────▼───┐  ┌───▼──┐    ┌───▼──┐
 │ X(-15)│  │ X(-14)│───────────│  X 13  │  │ X 14 │    │ X 15 │
 └───┬───┘  └───┬───┘           └────┬───┘  └──┬───┘    └──┬───┘     11
 ┌───▼───┐  ┌───▼───┐           ┌────▼───┐  ┌──▼───┐    ┌──▼───┐
 │-15DSR │  │-14DSR │───────────│+13 DSR │  │+14DSR│    │+15DSR│
 └───┬───┘  └───┬───┘           └────┬───┘  └──┬───┘    └──┬───┘
                                                                    12
```

FROM QP    m → 30 INPUTS SEL ~ 13

CPA

# Fig. 3

FROM Pi

14

$D_F$  $D_E$  $D_D$  $D_O$  $D_{-E}$  $D_{-F}$

FROM DSR

A B   A B   A B   A B   A B   A B

15F   15E   15D   15O   $15_{-E}$   $15_{-F}$

LMOD

16

m
( TO MULT )

15

# Fig. 4

| CPAO \ m | − 15 | − 14 | − 13 | | +14 | +15 |
|---|---|---|---|---|---|---|
| − 32 | L-32,15 | L-32,14 | L-32,13 | | L-32,14 | L-32,15 |
| − 32 | L-31,-15 | L-31,14 | L-31,-13 | | | |
| − 30 | L-30,15 | L-30,14 | L-30,-13 | | | |
| − 29 | L-29,-15 | L-29,14 | L-29,-13 | | | |
| − 28 | | | | | | |
| − 3 | L-3,15 | L-3,-14 | L-3,-13 | | | |
| − 2 | | | | | | |
| − 1 | | | | | | |
| 0 | | | | | | |
| + 1 | | | | | | |
| + 2 | | | | | | |
| + 29 | | | | | | |
| + 30 | | | | | | |
| + 31 | L 31,-15 | L31,-14 | L31,-13 | | L 31, 14 | L31, 15 |

# Fig. 5

FROM DSR

m → ±1X → ±2/±4X → ±8/±16X ~22

SR #1    SR #2    SR #3 ~23

CSA1 ~24

C    S

FIG 6

# Fig. 7

| Pi \ ml | F | E | D | C | B | A | 9 | 8 | 7 | 6 | 5 | 4 | 3 | 2 | 1 | 0 |
|---|---|---|---|---|---|---|---|---|---|---|---|---|---|---|---|---|
| 0 0 | | | | | | | | | | | | | | | | 100 |
| 0 1 | | | | | | | | | | | | | | | 100 | |
| 0 2 | | | | | | | | | | | | | | 100 | | |
| 0 3 | | | | | | | | | | | | | 100 | 180 | | |
| 0 4 | | | | | | | | | | | | 100 | 150 | | | |
| 0 5 | | | | | | | | | | | 100 | 140 | 1A0 | | | |
| 0 6 | | | | | | | | | | 100 | 130 | 180 | | | | |
| 0 7 | | | | | | | | | 100 | 128 | 160 | 100 | | | | |
| 0 8 | | | | | | | | 100 | 124 | 150 | 190 | | | | | |
| 0 9 | | | | | | | 100 | 120 | 148 | 180 | 1C0 | | | | | |
| 0 A | | | | | | 100 | 11C | 140 | 168 | 1A0 | | | | | | |
| 0 B | | | | | 100 | 118 | 138 | [160] | 190 | 1C0 | | | | | | |
| 0 C | | | | 100 | 116 | 130 | 150 | 180 | 180 | | | | | | | |
| 0 D | | | 100 | 114 | 12C | 148 | 170 | 1A0 | 1D0 | | | | | | | |
| 0 E | | 100 | 113 | 128 | 144 | 160 | 188 | 1C0 | | | | | | | | |
| 0 F | 100 | 112 | 126 | 140 | 158 | 180 | 1A0 | 1E0 | | | | | | | | |
| 1 0 | 100 | 124 | 138 | 150 | 172 | 190 | 1C0 | | | | | | | | | |
| 1 1 | 100 | 134 | 14C | 168 | 188 | 180 | 1E0 | | | | | | | | | |
| 1 2 | 100 | 148 | 160 | 180 | 1A0 | 1C0 | | | | | | | | | | |
| 1 3 | 100 | 158 | 170 | 190 | 1B0 | 1E0 | | | | | | | | | | |
| 1 4 | 100 | 168 | 188 | 1A0 | 1D0 | | | | | | | | | | | |
| 1 5 | 100 | 180 | 198 | 1C0 | 1E0 | | | | | | | | | | | |
| 1 6 | 100 | 190 | 1B0 | 1D0 | | | | | | | | | | | | |
| 1 7 | 100 | 1A0 | 1D0 | 1E0 | | | | | | | | | | | | |
| 1 8 | 100 | 1B0 | 1D0 | | | | | | | | | | | | | |
| 1 9 | 100 | 1C0 | 1E0 | | | | | | | | | | | | | |
| 1 A | 100 | 1D0 | | | | | | | | | | | | | | |
| 1 B | 100 | 1E0 | | | | | | | | | | | | | | |
| 1 C | 100 | | | | | | | | | | | | | | | |
| 1 D | 100 | | | | | | | | | | | | | | | |
| 1 E | 100 | | | | | | | | | | | | | | | |
| 1 F | 100 | | | | | | | | | | | | | | | |

# Fig. 8A

| Bit0 | Bit1 | Bit2 | Bit3 | 0 | 1 | 2 | 3 | 4 | 5 | 6 | 7 | 8 | 9 | A | B | C | D | E | F |
|---|---|---|---|---|---|---|---|---|---|---|---|---|---|---|---|---|---|---|---|
| 0 | 0 | 0 | 0 | 1 | 0 | 0 | 0 | 0 | 0 | 0 | 0 | 0 | 0 | 0 | 0 | 0 | 0 | 0 | 0 |
| 0 | 0 | 0 | 1 | 0 | 1 | 0 | 0 | 0 | 0 | 0 | 0 | 0 | 0 | 0 | 0 | 0 | 0 | 0 | 0 |
| 0 | 0 | 1 | 0 | 0 | 0 | 1 | 0 | 0 | 0 | 0 | 0 | 0 | 0 | 0 | 0 | 0 | 0 | 0 | 0 |
| 0 | 0 | 1 | 1 | 0 | 0 | 0 | 1 | 0 | 0 | 0 | 0 | 0 | 0 | 0 | 0 | 0 | 0 | 0 | 0 |
| 0 | 1 | 0 | 0 | 0 | 0 | 0 | 0 | 1 | 0 | 0 | 0 | 0 | 0 | 0 | 0 | 0 | 0 | 0 | 0 |
| 0 | 1 | 0 | 1 | 0 | 0 | 0 | 0 | 0 | 1 | 0 | 0 | 0 | 0 | 0 | 0 | 0 | 0 | 0 | 0 |
| 0 | 1 | 1 | 0 | 0 | 0 | 0 | 0 | 0 | 0 | 1 | 0 | 0 | 0 | 0 | 0 | 0 | 0 | 0 | 0 |
| 0 | 1 | 1 | 1 | 0 | 0 | 0 | 0 | 0 | 0 | 0 | 1 | 0 | 0 | 0 | 0 | 0 | 0 | 0 | 0 |
| 1 | 0 | 0 | 0 | 0 | 0 | 0 | 0 | 0 | 0 | 0 | 0 | 1 | 0 | 0 | 0 | 0 | 0 | 0 | 0 |
| 1 | 0 | 0 | 1 | 0 | 0 | 0 | 0 | 0 | 0 | 0 | 0 | 0 | 1 | 0 | 0 | 0 | 0 | 0 | 0 |
| 1 | 0 | 1 | 0 | 0 | 0 | 0 | 0 | 0 | 0 | 0 | 0 | 0 | 0 | 1 | 0 | 0 | 0 | 0 | 0 |
| 1 | 0 | 1 | 1 | 0 | 0 | 0 | 0 | 0 | 0 | 0 | 0 | 0 | 0 | 0 | 1 | 0 | 0 | 0 | 0 |
| 1 | 1 | 0 | 0 | 0 | 0 | 0 | 0 | 0 | 0 | 0 | 0 | 0 | 0 | 0 | 0 | 1 | 0 | 0 | 0 |
| 1 | 1 | 0 | 1 | 0 | 0 | 0 | 0 | 0 | 0 | 0 | 0 | 0 | 0 | 0 | 0 | 0 | 1 | 0 | 0 |
| 1 | 1 | 1 | 0 | 0 | 0 | 0 | 0 | 0 | 0 | 0 | 0 | 0 | 0 | 0 | 0 | 0 | 0 | 1 | 0 |
| 1 | 1 | 1 | 1 | 0 | 0 | 0 | 0 | 0 | 0 | 0 | 0 | 0 | 0 | 0 | 0 | 0 | 0 | 0 | 1 |

①

# Fig. 8 B

| | SIGN | Bit0 | Bit1 | Bit2 | Bit3 | 0 | 1 | 2 | 3 | 4 | 5 | 6 | 7 | 8 | 9 | A | B | C | D | E | F |
|---|---|---|---|---|---|---|---|---|---|---|---|---|---|---|---|---|---|---|---|---|---|
| | 0 | 0 | 0 | 0 | 0 | 0 | 1 | 0 | 0 | 0 | 0 | 0 | 0 | 0 | 0 | 0 | 0 | 0 | 0 | 0 | 0 |
| | 0 | 0 | 0 | 0 | 1 | 0 | 0 | 1 | 0 | 0 | 0 | 0 | 0 | 0 | 0 | 0 | 0 | 0 | 0 | 0 | 0 |
| | 0 | 0 | 0 | 1 | 0 | 0 | 0 | 0 | 1 | 0 | 0 | 0 | 0 | 0 | 0 | 0 | 0 | 0 | 0 | 0 | 0 |
| | 0 | 0 | 0 | 1 | 1 | 0 | 0 | 0 | 0 | 1 | 0 | 0 | 0 | 0 | 0 | 0 | 0 | 0 | 0 | 0 | 0 |
| ② | 0 | 0 | 1 | 0 | 0 | 0 | 0 | 0 | 0 | 0 | 1 | 0 | 0 | 0 | 0 | 0 | 0 | 0 | 0 | 0 | 0 |
| | 0 | 0 | 1 | 0 | 1 | 0 | 0 | 0 | 0 | 0 | 0 | 1 | 0 | 0 | 0 | 0 | 0 | 0 | 0 | 0 | 0 |
| | 0 | 0 | 1 | 1 | 0 | 0 | 0 | 0 | 0 | 0 | 0 | 0 | 1 | 0 | 0 | 0 | 0 | 0 | 0 | 0 | 0 |
| | 0 | 0 | 1 | 1 | 1 | 0 | 0 | 0 | 0 | 0 | 0 | 0 | 0 | 1 | 0 | 0 | 0 | 0 | 0 | 0 | 0 |
| | 0 | 1 | 0 | 0 | 0 | 0 | 0 | 0 | 0 | 0 | 0 | 0 | 0 | 0 | 1 | 0 | 0 | 0 | 0 | 0 | 0 |
| | 0 | 1 | 0 | 0 | 1 | 0 | 0 | 0 | 0 | 0 | 0 | 0 | 0 | 0 | 0 | 1 | 0 | 0 | 0 | 0 | 0 |
| | 0 | 1 | 0 | 1 | 0 | 0 | 0 | 0 | 0 | 0 | 0 | 0 | 0 | 0 | 0 | 0 | 1 | 0 | 0 | 0 | 0 |
| | 0 | 1 | 0 | 1 | 1 | 0 | 0 | 0 | 0 | 0 | 0 | 0 | 0 | 0 | 0 | 0 | 0 | 1 | 0 | 0 | 0 |
| | 0 | 1 | 1 | 0 | 0 | 0 | 0 | 0 | 0 | 0 | 0 | 0 | 0 | 0 | 0 | 0 | 0 | 0 | 1 | 0 | 0 |
| | 0 | 1 | 1 | 0 | 1 | 0 | 0 | 0 | 0 | 0 | 0 | 0 | 0 | 0 | 0 | 0 | 0 | 0 | 0 | 1 | 0 |
| | 0 | 1 | 1 | 1 | 0 | 0 | 0 | 0 | 0 | 0 | 0 | 0 | 0 | 0 | 0 | 0 | 0 | 0 | 0 | 0 | 1 |
| | 0 | 1 | 1 | 1 | 1 | 0 | 0 | 0 | 0 | 0 | 0 | 0 | 0 | 0 | 0 | 0 | 0 | 0 | 0 | 0 | 0 |
| | 1 | 0 | 0 | 0 | 0 | 0 | 0 | 0 | 0 | 0 | 0 | 0 | 0 | 0 | 0 | 0 | 0 | 0 | 0 | 0 | 0 |
| | 1 | 0 | 0 | 0 | 1 | 1 | 0 | 0 | 0 | 0 | 0 | 0 | 0 | 0 | 0 | 0 | 0 | 0 | 0 | 0 | 0 |
| | 1 | 0 | 0 | 1 | 0 | 0 | 1 | 0 | 0 | 0 | 0 | 0 | 0 | 0 | 0 | 0 | 0 | 0 | 0 | 0 | 0 |
| | 1 | 0 | 0 | 1 | 1 | 0 | 0 | 1 | 0 | 0 | 0 | 0 | 0 | 0 | 0 | 0 | 0 | 0 | 0 | 0 | 0 |
| ③ | 1 | 0 | 1 | 0 | 0 | 0 | 0 | 0 | 1 | 0 | 0 | 0 | 0 | 0 | 0 | 0 | 0 | 0 | 0 | 0 | 0 |
| | 1 | 0 | 1 | 0 | 1 | 0 | 0 | 0 | 0 | 1 | 0 | 0 | 0 | 0 | 0 | 0 | 0 | 0 | 0 | 0 | 0 |
| | 1 | 0 | 1 | 1 | 0 | 0 | 0 | 0 | 0 | 0 | 1 | 0 | 0 | 0 | 0 | 0 | 0 | 0 | 0 | 0 | 0 |
| | 1 | 0 | 1 | 1 | 1 | 0 | 0 | 0 | 0 | 0 | 0 | 1 | 0 | 0 | 0 | 0 | 0 | 0 | 0 | 0 | 0 |
| | 1 | 1 | 0 | 0 | 0 | 0 | 0 | 0 | 0 | 0 | 0 | 0 | 1 | 0 | 0 | 0 | 0 | 0 | 0 | 0 | 0 |
| | 1 | 1 | 0 | 0 | 1 | 0 | 0 | 0 | 0 | 0 | 0 | 0 | 0 | 1 | 0 | 0 | 0 | 0 | 0 | 0 | 0 |
| | 1 | 1 | 0 | 1 | 0 | 0 | 0 | 0 | 0 | 0 | 0 | 0 | 0 | 0 | 1 | 0 | 0 | 0 | 0 | 0 | 0 |
| | 1 | 1 | 0 | 1 | 1 | 0 | 0 | 0 | 0 | 0 | 0 | 0 | 0 | 0 | 0 | 1 | 0 | 0 | 0 | 0 | 0 |
| | 1 | 1 | 1 | 0 | 0 | 0 | 0 | 0 | 0 | 0 | 0 | 0 | 0 | 0 | 0 | 0 | 1 | 0 | 0 | 0 | 0 |
| | 1 | 1 | 1 | 0 | 1 | 0 | 0 | 0 | 0 | 0 | 0 | 0 | 0 | 0 | 0 | 0 | 0 | 1 | 0 | 0 | 0 |
| | 1 | 1 | 1 | 1 | 0 | 0 | 0 | 0 | 0 | 0 | 0 | 0 | 0 | 0 | 0 | 0 | 0 | 0 | 1 | 0 | 0 |
| | 1 | 1 | 1 | 1 | 1 | 0 | 0 | 0 | 0 | 0 | 0 | 0 | 0 | 0 | 0 | 0 | 0 | 0 | 0 | 1 | 0 |

# Fig. 9A

| CPA1 \ m1 | − 16 | − 14 | − 12 | | + 12 | + 14 |
|---|---|---|---|---|---|---|
| − 32 | L´-32;16 | L´-32,-14 | L´-32,-12 | | L´-32;12 | L´-32, 14 |
| − 30 | L´-30,-16 | L´-30,-14 | L´-30, -12 | | | |
| − 28 | L´-28;16 | | | | | |
| − 2 | L´-2,-16 | | | | | |
| 0 | L´ 0,-16 | | | | | |
| + 2 | L´ 2,-16 | | | | | |
| + 28 | L´ 28;16 | | | | | |
| + 30 | L´-30,-16 | | | | | |

# Fig. 9 B

| CPA 2 / m 2 | + 1 |
|---|---|
| − 32 | L″ − 32 |
| − 31 | L″ − 31 |
| − 30 | L″ − 30 |
| − 2 | L″ − 2 |
| − 1 | L″ − 1 |
| 0 | L″ 0 |
| + 1 | L″ 1 |
| + 30 | L″ 30 |
| + 31 | L″ 31 |